(19) Europäisches Patentamt

European Patent Office

Office européen des brevets

(11) Publication number: **0 300 761 B1**

(12) **EUROPEAN PATENT SPECIFICATION**

(45) Date of publication of patent specification: **15.07.92**    (51) Int. Cl.⁵: **B60H  1/00**, G05D 23/19

(21) Application number: **88306648.2**

(22) Date of filing: **20.07.88**

(54) **Automotive air conditioning system.**

(30) Priority: **20.07.87 JP 110013/87**

(43) Date of publication of application:
**25.01.89 Bulletin  89/04**

(45) Publication of the grant of the patent:
**15.07.92 Bulletin  92/29**

(84) Designated Contracting States:
**DE FR GB IT SE**

(56) References cited:

**PATENT ABSTRACTS OF JAPAN, vol. 4, no.
60 (M-10)[542], 6th May 1980, page 32 M 10; &
JP-A-55 25 645 (NITSUSAN SHIYATAI K.K.)
23-02-1980**

**PATENT ABSTRACTS OF JAPAN, vol. 6, no.
80 (M-129)[958], 19th May 1982; & JP-A-57 18
510 (NISSAN JIDOSHA K.K.) 30-01-1982**

**PATENT ABSTRACTS OF JAPAN, vol. 10, no.
331 (M-533)[2387], 11th November 1986; &
JP-A-61 135 816 (NIPPON DENSO CO., LTD)
23-06-1986**

**PATENT ABSTRACTS OF JAPAN, vol. 8, no.
284 (M-348)[1721], 26th December 1984; &**
**JP-A-59 153 612 (DIESEL KIKI K.K.) 01-09-1984**
(73) Proprietor: **SANDEN CORPORATION
20 Kotobuki-cho
Isesaki-shi Gunma, 372(JP)**

(72) Inventor: **Akabane, Hidemitsu
880 Kami-Namie-cho
Takasaki-shi Gunma 370(JP)**
Inventor: **Isobe, Toshimi
2263-2, Toyoshiro-cho
Isesaki-shi Gunma 372(JP)**
Inventor: **Hoshino, Seiichi
113-1 Kizaki Nitta-machi
Nitta-gun Gunma 370-03(JP)**

(74) Representative: **Jackson, Peter Arthur et al
Gill Jennings & Every, 53-64 Chancery Lane
London WC2A 1HN(GB)**

## Description

This invention relates to an automotive air conditioning system, and more particularly, to an automotive air conditioning system which controls temperature of the air flow out to a compartment in accordance with an angle of an air mixing damper driven by a motor actuator.

A conventional automotive air conditioning system which includes an automatic air temperature control function is provided with a first control circuit. The first control circuit computes a desired angle of an air mixing damper in accordance with a predetermined temperature, an outside air temperature and an inside air temperature etc. and drives the air mixing damper to be the desired angle by a drive device, e.g., a motor actuator, and thereby controlling the temperature of the air flow.

In the above automotive air conditioning system, when a lever for predetermining temperature of the air flow is positioned for maximum heating or cooling, the air mixing damper is forcedly moved to the position for the maximum heating or cooling independently of the above conditions. The control of the air mixing damper is made by a second control circuit different from the first control circuit.

Additionally, when the air mixing damper is blocked with a foreign matter or a reduction speed gear for the motor actuator is blocked by some cause, motion of the motor actuator is locked. If things come to the worst, the motor is destroyed, and may cause a fire. To prevent the above problems, a lock detecting function is included which stops the supply of electricity continuously in accordance with detected signals thereof in a micro-computer in the first control circuit.

However, since the control for the maximum heating or cooling is the second control circuit and not made by the above micro-computer, the lock detecting function cannot be operated.

JP-A-55-22645 discloses an automotive air conditioning system including a first control circuit for automatically controlling an angle of an air mixing damper in accordance with a plurality of conditions; and, according to the invention, such a system is characterised by a switching means for setting a maximum heating or cooling; and a second control circuit for moving the air mixing damper to a position for the maximum heating or cooling independently of the conditions and in accordance with operation of the switching means; the second control circuit including a drive circuit for outputting a drive signal to move the air mixing damper to the position for maximum heating or cooling for only a predetermined time.

In the accompanying drawings:

Figure 1 is a schematic view of an automotive air conditioning system in accordance with one embodiment of this invention;

Figure 2 is a circuit diagram of a motor actuator drive circuit as shown in Figure 1; and,

Figure 3 is a graph for showing the relationship between a time and a voltage at a comparator.

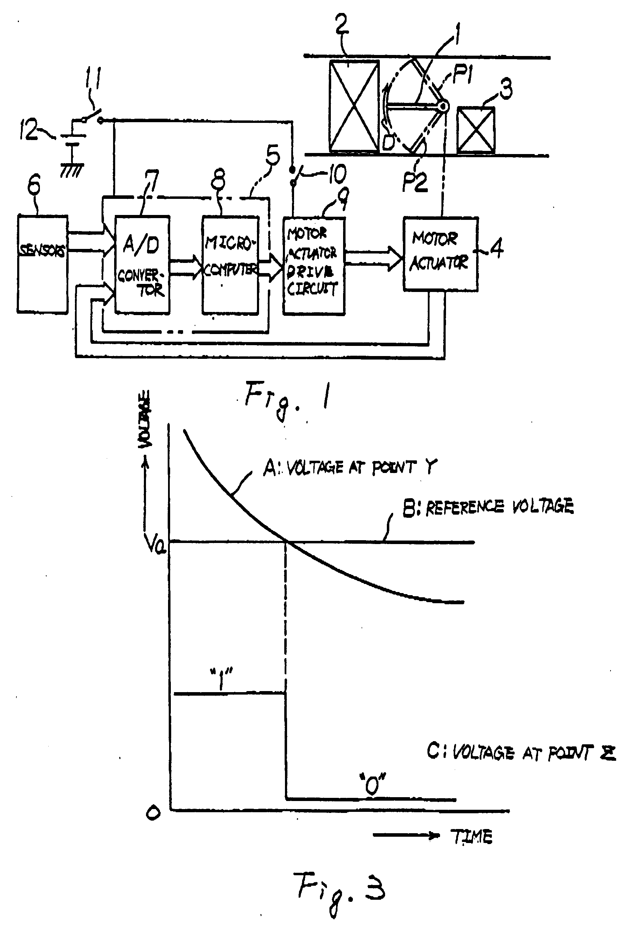

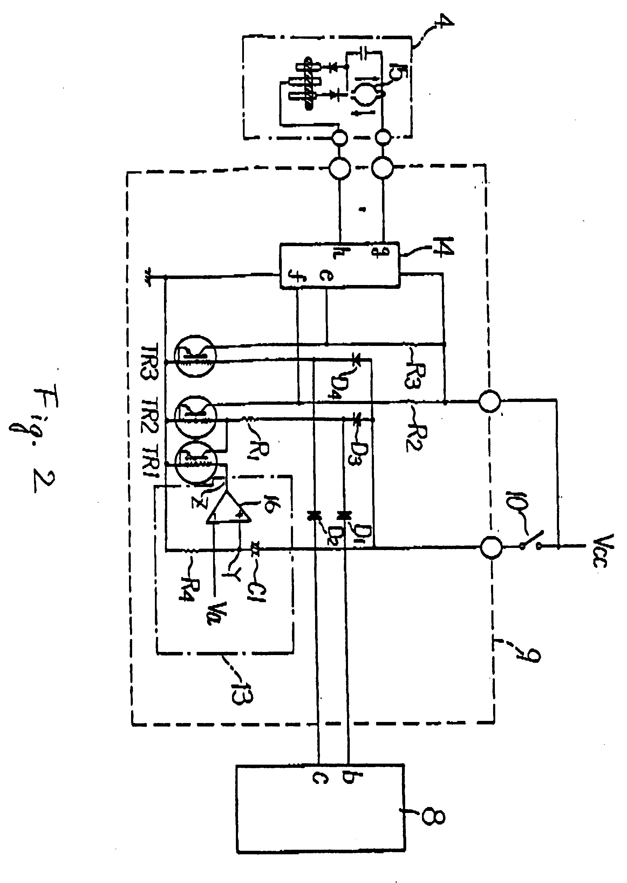

With reference to Figure 1, an air mixing damper 1 is disposed backward of evaporator 2 and controls the volume of the air which is blown to heater core 3, thereby the temperature of the air blown out is controlled. Motor actuator 4 is coupled with air mixing damper 1 through a wire or link to vary an open angle of air mixing damper 1. When air mixing damper 1 is positioned at P1, the automotive air conditioning system is at maximum heating and when damper 1 is positioned at P2, the system is at maximum cooling. A potentiometer (not shown) is disposed in motor actuator 4 and electrically outputs a position signal of motor actuator 4.

First control circuit 5 for automatically controlling temperature of the air blown out controls operation of motor 9 in accordance with a control program in micro-computer 8. A plurality of sensors 6, e.g., an inside air temperature sonsor, an outside air temperature sensor, an evaporator temperature sensor, a water temperature sensor, an isolation sensor and a temperature setting device, and the potentionmeter of motor actuator 4, are coupled with microcomputer 8, which is coupled with motor actuator 4 through actuator drive circuit 9. Air mixing damper 1 driven in the direction of arrow D when motor actuator 4 outputs a positive signal.

Maximum heating setting switch 10 which is disposed on a temperature setting lever is connected to motor actuator drive circuit 9 and closed when maximum heating is set. A second control circuit includes maximum heating setting switch 10 and moves air mixing damper 1 to the maximum heating position independently of output signals from sensors 6. Ignition switch 11 connects maximum heating setting switch 10 with automotive battery 12.

With reference to Figure 2, a circuit diagram of motor actuator drive circuit 9 is shown.

Integrated circuit 14 for motor drive has four terminals; two terminals are input terminals e and f and the other two terminals are output terminals g and h. The relationship among inputs e and f, outputs g and h, and a rotating direction of motor actuator 4 is described in the following graph.

2

| INPUT | | OUTPUT | | MOTOR ACTUATOR |
|---|---|---|---|---|
| e | f | g | h | ROTATING DIRECTION |
| 0 | 0 | 0 | 0 | STOP |
| 1 | 0 | 1 | 0 | REVERSE ROTATING DIRECTION |
| 0 | 1 | 0 | 1 | FORWARD ROTATING DIRECTION |
| 1 | 1 | 0 | 0 | STOP |

The operation of motor actuator 4 in an ordinal automatic control is now described below. When motor 15 in motor actuator 4 is rotated in reverse rotating direction, signals "1" and "0" are output from Ports b and c of micro-computer 8, respectively. Signal "1" output from port b is input to a base of transistor Tr2 through diode D1 and resistor R1. Since transistor Tr1 is off, transistor Tr2 is turned on. Power source voltage Vcc is applied to a collector of transistor Tr2 and transistor Tr2 is on, and thereby signal "0" output from port c is input to input terminal f of integrated circuit 14. Likewise, since signal "0" is output from port c to transistor Tr3, transistor Tr3 is turned off. Power source voltage Vcc is supplied with a collector of transistor Tr3 through resistor R3. Since transistor Tr3 is off, signal "1" is input to input terminal e of integrated circuit 14. Accordingly, signals "1" and "0" are output from output terminals g and h, respectively, and motor 5 is rotated in reverse rotating direction.

Contrarily, when motor 15 in motor actuator 4 is rotated in forward rotating direction, signals "0" and "1" are output from ports b and c of micro-computer 8, respectively. Accordingly, transistor Tr2 is off and transistor Tr3 is on, and signals "0" and "1" are input to input terminals e and f of integrated circuit 14, respectively. Singals "0" and "1" are output from output terminals g and h of integrated circuit 14, and thereby motor 15 is rotated in forward rotating direction.

The rotation of motor actuator 4 for maximum heating is now described below. When a lever for setting temperature of the air blown out is positioned at the maximum heating, switch 10 is turned on, and power source voltage Vcc is applied to noninverting input terminal (+) of comparator 16 in delay circuit 13. Accordingly, signal "1" is output from output terminal Z of comparator 16 for a predetermined time, and transistor Tr1 is turned on. Transistor Tr2 is thus turned off in spite of input from port b of micro-computer 8, and signal "1" is input to input terminal f of integrated circuit 14 for a predetermined time. Power source voltge Vcc is also applied to a base of transistor Tr3 through diode D4, and thereby transistor Tr3 is turned on in spite of input from port c of micro-computer 8, and signal "0" is input to input terminal e of integrated circuit 14. After the predetermined time has passed, signal "0" is output from output terminal Z of comparator 16. Accordingly, transistor Tr1 is turned off and transistor Tr2 is turned on in spite of input from port b of micro-computer 8 since power source voltage Vcc is applied to a base of transistor Tr2 through diode D3. Signal "0" is thus input to input terminal f of integrated circuit 14. The supply of power source voltage Vcc to transistor Tr3 is continuously made, and signal "0" is also continuously input to input terminal e of integrated circuit 14. Therefore, motor 15 is stopped.

As mentioned above, after switch 10 is turned on, signals "0" and "1" are input to input terminals e and f of integrated circuit 14, respectively, for only a predetermined time in spite of output from ports b and c of micro-computer 8. After the predetermined time has passed, signals "0" and "0" are input to input terminal e and f, and thereby motor 15 in stopped, i.e., a signal for ordinal rotating direction is input to motor 15 for an only predetermined time. The predetermined time, i.e., delay time is predetermined to be the time within which air mixing damper 1 can move from a position for minimum heating to that for maximum heating.

Delay operation of delay circuit 13 is described below. When switch 10 is closed and power source voltage is applied to delay circuit 13, the voltage at point Y is indicated by curve A as shown in Figure 3 in accordance with characteristic of charging electricity of condenser C1 and resistor R4. Comparator 16 operates as a differential amplifier. The voltage at point Y is applied to its non-inverting input terminal (+) and reference voltage Va, indicated by straight line B as shown in Figure 3 is applied to its inverting terminal. Accordingly, as shown by line C in Figure 3, when the voltage at point Y is higher than reference voltage Va, signal "1" is output from output terminal Z or comparator 16, i.e., a differential amplifier. Otherwise, signal "0" is output from outlet terminal Z of comparator 16.

According to the above construction and operation, when the maximum heating is required even though air mixing damper 1 or a reduction speed gear is locked, since a drive signal is output to motor actuator 4 for only a time in which motor actuator 4 does not become feverish, motor actuator 4 is prevented from destroying.

**Claims**

1. An automotive air conditioning system including a first control circuit (5) for automatically controlling an angle of an air mixing damper (1) in accordance with a plurality of conditions; characterised by a switching means (1) for setting a maximum heating or cooling; and a second control circuit (9) for moving the air mixing damper (1) to a position for the maximum heating or cooling independently of the conditions and in accordance with operation of the switching means; the second control circuit including a drive circuit (13) for outputting a drive signal to move the air mixing damper to the position for maximum heating or cooling for only a predetermined time.

2. A system according to claim 1, wherein the length of the predetermined time is that necessary for the air mixing damper to move from the position for a minimum heating or cooling to the position for a maximum heating or cooling.

**Revendications**

1. Système de conditionnement d'air pour véhicule comprenant un premier circuit de commande (5) destiné à commander automatiquement l'angle d'un registre de mélange d'air (1) en fonction d'un certain nombre de conditions ; système caractérisé en ce qu'il comprend des moyens de commutation (1) destinés à régler un chauffage maximum ou un refroidissement maximum ; et un second circuit de commande (9) destiné à amener le registre de mélange d'air (1) dans une position correspondant au chauffage maximum ou au refroidissement maximum indépendamment des conditions ci-dessus et suivant le fonctionnement des moyens de commutation ; le second circuit de commande comprenant un circuit d'entraînement (13) destiné à fournir un signal d'entraînement pour amener le registre de mélange d'air dans une position de chauffage maximum ou de refroidissement maximum pendant seulement une période de temps prédéterminée.

2. Système selon la revendication 1, caractérisé en ce que la longueur de la période de temps prédéterminée correspond au temps nécessaire pour que le registre de mélange d'air passe de la position de chauffage ou de refroidissement minimum à la position de chauffage ou de refroidissement maximum.

**Patentansprüche**

1. Kraftfahrzeugklimaanlage mit einer ersten Steuerschaltung (5) zum automatischen Steuern eines Winkels einer Luftmischklappe (1) gemäß einer Mehrzahl von Bedingungen; gekennzeichnet durch eine Schalteinrichtung (1) zum Einstellen einer maximalen Heizung oder Kühlung und eine zweite Steuerschaltung (9) zum Bewegen der Luftmischklappe (1) in eine Position für die maximale Heizung oder Kühlung unabhängig von den Bedingungen und gemäß der Tätigkeit der Schalteinrichtung; wobei die zweite Steuerschaltung eine Treiberschaltung (13) zum Ausgeben eines Treibersignales zum Bewegen der Luftmischklappe nur während einer vorbestimmten Zeit in die Position für maximale Heizung oder Kühlung aufweist.

2. Anlage nach Anspruch 1, bei der die Länge der vorbestimmten Zeit die ist, die für die Luftmischklappe notwendig ist, von der Position für minimale Heizung oder Kühlung in die Position für maximale Heizung oder Kühlung zu gehen.

Fig. 1

A: VOLTAGE AT POINT Y

B: REFERENCE VOLTAGE

Vo

"1"

C: VOLTAGE AT POINT Z

"0"

O

TIME

Fig. 3

Fig. 2